Europäisches Patentamt

European Patent Office

Office européen des brevets

(11) Publication number: **0 145 175**
**B1**

(19)

# EUROPEAN PATENT SPECIFICATION

(12)

(45) Date of publication of patent specification: **28.09.88**

(51) Int. Cl.⁴: **G 01 N 27/56**

(21) Application number: **84307109.3**

(22) Date of filing: **17.10.84**

(54) Oxygen sensor.

(30) Priority: **10.11.83 JP 174005/83 u**
**11.11.83 JP 175033/83 u**

(43) Date of publication of application:
**19.06.85 Bulletin 85/25**

(45) Publication of the grant of the patent:
**28.09.88 Bulletin 88/39**

(84) Designated Contracting States:
**DE FR GB**

(56) References cited:
**DE-A-2 511 066**
**DE-A-3 041 581**
**DE-A-3 105 089**
**FR-A-2 396 292**
**GB-A-1 523 010**
**US-A-4 057 477**
**US-A-4 370 213**

(73) Proprietor: **NGK Spark Plug Co. Ltd.**
**No. 14-18, Takatsuji-cho Mizuho-ku**
**Nagoya-shi Aichi-ken 467 (JP)**

(72) Inventor: **Nishio, Hisaharu**
**7-10, 4-chome, Fushimi Fukishima-machi**
**Tokai-shi Aichi-ken (JP)**
Inventor: **Okumura, Toshio**
**306, 2-chome, Oozano-cho**
**Kakamigahara-shi Gifu-ken (JP)**

(74) Representative: **Topps, Ronald et al**
**D. YOUNG & CO 10 Staple Inn**
**London WC1V 7RD (GB)**

## Description

The present invention relates to an oxygen sensor for detecting any concentration of oxygen present in the exhaust gases emanating from a combustion apparatus.

The present invention is also concerned with an oxygen sensor provided with a heater for heating an oxygen sensing element.

Oxygen sensors having an oxygen sensing element comprising a solid electrolyte, such as zirconia, have heretofore been widely used for detecting the concentration of oxygen in the exhaust gases from a combustion apparatus such as internal combustion engines.

DE—A—3 105 089 discloses an oxygen sensor of the type set out in the preamble of Claim 1, wherein the output lead wire is electrically connected to the inner electrode layer through a metallic coiled spring terminal having a portion urged into contact with the inner electrode layer. Such an oxygen sensor requires an internally screw-threaded portion for the spring terminal.

FR—A—2 396 292 discloses the provision of a ceramic heater in an oxygen sensor.

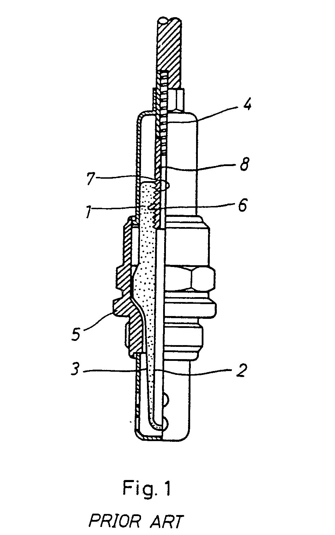

Oxygen sensors of this type, as shown in Figure 1 of the accompanying drawings, are composed of a cylindrical oxygen sensing element 1 formed of zirconia or the like and having one closed end, inner and outer electrode layers 2 and 3 formed of platinum or the like deposited on the inner and outer surfaces of the oxygen sensing element 1, an output lead wire 4 connected electrically to the inner electrode layer 2 for receiving the output from the same layer, and a housing 5 for holding the oxygen sensing element 1, the housing 5 being connected electrically to the outer electrode layer 3, in which the inner and outer electrode layers 2 and 3 are contacted with ambient air and exhaust gases, respectively, whereby the concentration of oxygen in the exhaust gases can be sensed.

Thus, it is necessary that the inner electrode layer 2 be contacted with ambient air and at the same time connected to the output lead wire 4. But, various difficulties have therefore been encountered in the connection between the output lead wire 4 and the inner electrode layer 2. For example, an internal screw-threaded portion 6 is formed in the inner surface of an open end portion of the oxygen sensing element 1, and a tubular metallic terminal 8 having an externally screw-threaded portion 7 is engaged with the internal screw-threaded portion 6 and at the same time connected to the output lead wire 4, or a coil-like terminal is engaged with the internal screw-threaded portion 6 and at the same time connected to the output lead wire 4, to thereby electrically connect the inner electrode layer 2 and the output lead wire 4 with each other. In these cases, however, a large clamping stress may be exerted on the internally screw-threaded portion 6 thereby causing damage to the oxygen sensing element 1. Attempts have been made to prevent damage of the oxygen sensing element by using a coiled spring terminal in place of the tubular metallic terminal 8 and fitting the spring terminal threadedly in the internally screw-threaded portion 6 (DE—A—3 105 089). But, in this case, since the outside diameter of the coiled spring terminal is formed larger than the inside diameter of the internally screw-threaded portion 6 so as to press the inner periphery of the internally screw-threaded portion 6, it is not easy to bring the coiled spring terminal into engagement with the internally screw-threaded portion 6, the operation being troublesome. Further, in view of the characteristic of the oxygen sensing element that this sensing element is improved in its oxygen sensing performance while it is held at a predetermined temperature, there has been proposed an oxygen sensor incorporating a heater for heating the oxygen sensing element (FR—A—2 396 292). In this case, however, it is necessary to dispose such heater in the interior of the oxygen sensing element, that is, inside the inner electrode layer, so particularly in the case of using a rod-like ceramic heater as such heater, a problem is encountered in the fixing method for the heater body.

Moreover, it is known to fix the heater using an adhesive or the like. But, in this case, the heater cannot be fixed firmly due to a change of the adhesive or the like with the lapse of time caused by heating or vibration, thus resulting in damage of the inner electrode layer or the heater itself.

According to the present invention there is provided an oxygen sensor including:

(a) a cylindrical oxygen sensing element formed of a solid electrolyte and having one end closed;

(b) an inner electrode layer provided on the inner surface of the cylindrical oxygen sensing element;

(c) an outer electrode layer provided on the outer surface of the cylindrical oxygen sensing element;

(d) an output lead wire electrically connected to the inner electrode layer; and

(e) a metallic terminal for connecting the inner electrode layer of the cylindrical oxygen sensing element with the output lead wire,

characterised in that said metallic terminal has a connecting portion formed by a cylindrically bent spring steel sheet which exhibits a resilient force in a radial direction, the connecting portion being axially inserted under application of a radial compressive force into the open end of the cylindrical oxygen sensing element and then released thereby being fixed in pressure contact and electrical connection with the inner electrode layer provided on the inner surface of the cylindrical oxygen sensing element.

The present invention provides an oxygen sensor which permits an easy connection of an output lead wire to the inner electrode layer without forming any screw-threaded portion thereby eliminating the development of a clamping stress and preventing damage of the oxygen sensing element.

Some embodiments of the invention will now be described, by way of examples, with reference to the accompanying drawings, in which:—

Figure 1 is a semi-sectional side view showing an example of a conventional oxygen sensor;

Figure 2 is a partially cut-away side view of an oxygen sensor according to a first embodiment of the present invention;

Figure 3 illustrates a shape of a connecting portion 21a of a metallic terminal 21, in which A is a development view, B is a side view and C is a sectional view taken along line X—X of side view B;

Figures 4 and 5 illustrate other shapes of metallic terminals 21 in each of which, like Figure 3, A is development view, B is a side view and C is a sectional view taken along line Y—Y or Z—Z.

Figure 6 illustrates an oxygen sensor according to a second embodiment of the present invention, in which A is a partially cut-away front view and B is a left end view;

Figure 7 illustrates a shape of a metallic terminal 15 used in the oxygen sensor of the second embodiment, in which A is a side view and B is a development view; and

Figures 8 and 9 illustrate other examples or metallic terminals in which, like Figure 7, A is a side view and B is a development view.

Embodiments of the present invention will now be described with reference to the accompanying drawings.

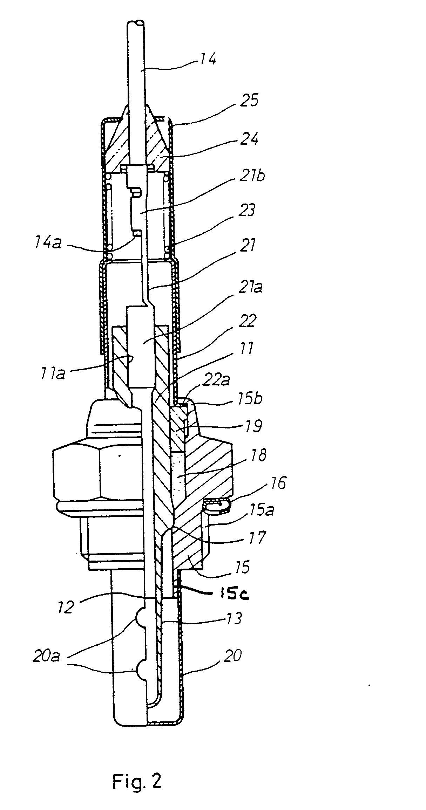

Figure 2 is a partially cut-away side·view of an oxygen sensor according to a first embodiment of the present invention, in which the reference numeral 11 denotes a cylindrical oxygen sensing element having one closed end and formed of a solid electrolyte such as zirconia; the numeral 12 denotes an inner electrode layer of platinum deposited on the inner surface of the oxygen sensing element 11 by vacuum evaporation or other suitable method; the numeral 13 denotes an outer electrode layer formed on the outer surface of the oxygen sensing element 11 like the inner electrode layer 12; the numeral 14 denotes an output lead wire connected electrically to .the inner electrode layer 12 for receiving the output from the latter; and the numeral 15 denotes a cylindrical housing for holding the oxygen sensing element 11, the housing 15 being electrically connected to the outer electrode layer 13. On the outer periphery of the housing 15 is formed a screw-threaded portion 15a for mounting the oxygen sensor to a combustion apparatus, and a gasket 16 for preventing the leak of exhaust gases is provided on the portion of the housing 15 to be brought into abutment with the wall surface of the combustion apparatus. Further, the housing 15 is formed with a caulking portion 15b, and by caulking this caulking portion 15b the oxygen sensing element 11 is held by the housing 15 through plate packing 17, talc 18, caulking ring 19 and tubular shell flange portion 22a which are disposed on the inner periphery of the housing 15. The numeral 20 denotes a protector for protecting the oxygen sensing element 11. The protector 20, which is attached to a combustion apparatus-side fore end portion 15c of the housing 15, has a plurality of exhaust gas passing holes 20a so that exhaust gases may be brought into contact with the outer electrode layer 13.

The numeral 21 denotes a metallic terminal for connecting the inner electrode layer 12 of the oxygen sensing element 11 with the output lead wire 14. The metallic terminal 21 is formed using a spring steel sheet which in this embodiment is stainless steel strip for spring SUS631-CSP, a precipitation hardening type stainless steel, and has a connecting portion 21a formed by rounding such spring steel sheet so as to exhibit a resilient force in a radial direction as will be described later. The connecting portion 21a is inserted under compressive force into an opening 11a of the oxygen sensing element 11 and then released, whereby it is fixed in pressure contact and electrical connection with the inner electrode layer 12 formed on the inner surface of the opening 11a. The connecting portion 21a is protected by a tubular shell 22 provided with said flange portion 22a. The metallic terminal 21 and the output lead wire 14 are connected by pressure bonding at the respective terminal portion 21b and core 14a, and are protected by a protective sleeve 25 which prevents ingress of water or oil into the interior of the sensor. The protective sleeve 25 is loaded by a spring 23 and has a sealing member 24 which is held against an end portion of the protective sleeve 25 by the spring 23 and through which is inserted the lead wire 14 and at the same time the lead wire 14 is held by the protective sleeve 25.

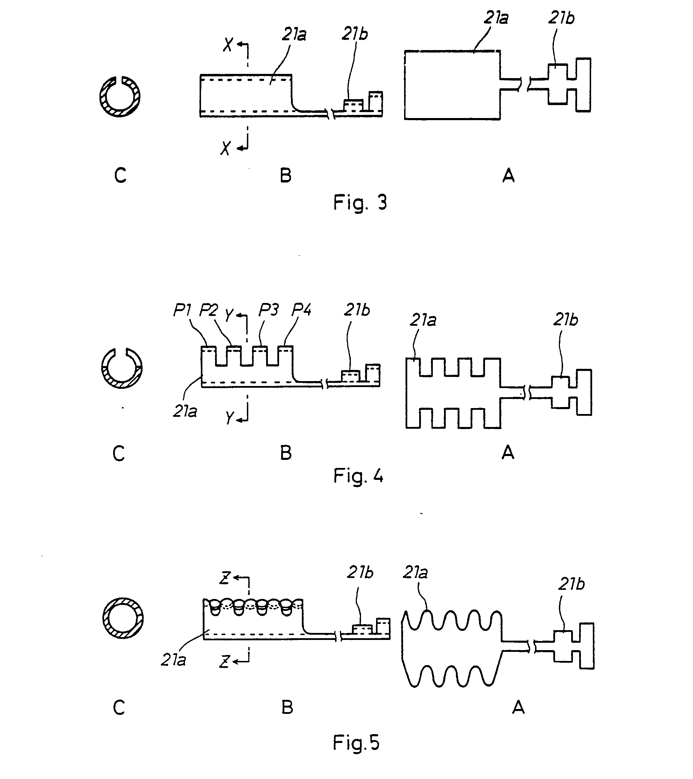

The metallic terminal 21, which is a principal portion in the present invention, has such a shape as shown in Figure 3. As is apparent from the development view of Figure 3A, the metallic terminal 21· is formed by punching a metallic sheet and it is provided with the connecting portion 21a and the terminal portion 21b which is a solderless terminal provided at an end of an elongated extension extending from the connecting portion 21a. The connecting portion 21a is formed into a cylinder from a rectangular metallic sheet, having no screw-thread portion, and thus can be easily formed. Therefore, in the case of using the metallic terminal 21, it is not necessary to form a screw-thread portion in the inner periphery of the opening portion 11a of the oxygen sensing element 11, and its mounting operation can be easily carried out. In Figure 3, B is a side view of the inner electrode connecting portion 21a and C is a sectional view taken on the line X—X.

Figures 4 and 5 illustrate different shapes of connecting portions 21a. The connecting portion 21a shown in Figure 4 is obtained by forming rectangular notches in a rectangular metallic sheet and then bending the sheet into a cylinder, while the connecting portion 21a shown in Figure 5 is obtained by forming wavy notches in a rectangular metallic sheet and then bending the sheet into a cylinder. Thus, in the cases where the connecting portion 21a of the metallic terminal is provided with by notches formed in a rectangular metallic sheet, the metallic terminal has a plurality of pressing portions in contact with the inner electrode layer 12. Therefore, for example, even in the event the metallic terminal is deformed by an external force and a pressing portion P1 shown in Figure 4 loses its resilience, the metallic terminal is firmly fixed to the inner electrode layer 12 by the resilience of other pressing portions P2 to P4, thereby ensuring withdrawal of the output from the metallic terminal.

Although in the above embodiments the connection between the metallic terminal 21 and the lead wire 14 is effected by pressure bonding of the metallic terminal, there may be adopted any other conventional bonding method, e.g. soldering.

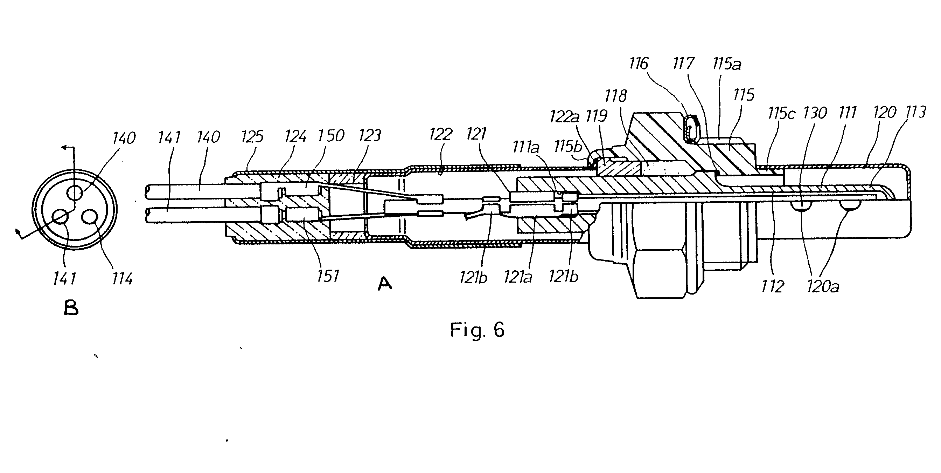

Referring now to Figure 6, there is illustrated an oxygen sensor according to a second embodiment of the present invention, in which A is a partially cut-away side view and B is a left end view. In Figure 6, the numeral 111 denotes an oxygen sensing element cylindrically formed of a solid electrolyte such as zirconia and having one closed end; the numeral 112 denotes an inner electrode layer of platinum deposited on the inner surface of the oxygen sensing element 111 by vacuum evaporation or other suitable method; the numeral 113 denotes an outer electrode layer of platinum deposited on the outer surface of the oxygen sensing element 111 like the inner electrode layer 112; the numeral 114 denotes an output lead wire electrically connected to the inner electrode layer 112 for receiving the output of the inner electrode layer 112; the numeral 115 denotes a cylindrical housing for holding the oxygen sensing element 111, the housing 115 being electrically connected to the outer electrode layer 113; and the numeral 130 denotes a rod-like ceramic heater for heating the oxygen sensing element 111, the heater 130 being disposed in the interior of the oxygen sensing element 111, that is, in the inside bore defined by the inner electrode layer 112. The ceramic heater 130 used herein is made by winding around a green aluminous core formed in an elongated tube shape a green aluminous sheet with a predetermined shape of a heater pattern of tungsten printed on one face the aluminous sheet being in close contact with the aluminous core, and then forming on the surface of the other face thereof printed faces of tungsten serving as connecting terminal faces electrically connected to both ends of the above buried pattern via through holes, followed by burning and subsequent nickel plating applied to the exposed faces of tungsten. It is in the form of a tube having an outside diameter of about 2.5 mm and an overall length of about 60 mm. On the outer periphery of the housing 115 is formed a screw-threaded portion 115a for mounting the oxygen sensor to a combustion apparatus, and a gasket 116 for preventing the leak of exhaust gases is provided on the portion of the housing 115 to be brought into abutment with the wall surface of the combustion apparatus. The housing 115 is formed with a caulking portion 115b, and by caulking this caulking portion 115b the oxygen sensing element 111 is held by the housing 115 through plate packing 117, talc 118, caulking ring 119 and sleeve flange portion 122a, which are disposed on the inner periphery of the housing 115. The numeral 120 denotes a protector for protecting the oxygen sensing element 111. The protector 120, which is attached to a combustion apparatus-side for end portion 115c of the housing 115, has a plurality of exhaust gas passing holes 120a so that exhaust gases may be brought into contact with the outer electrode layer 113.

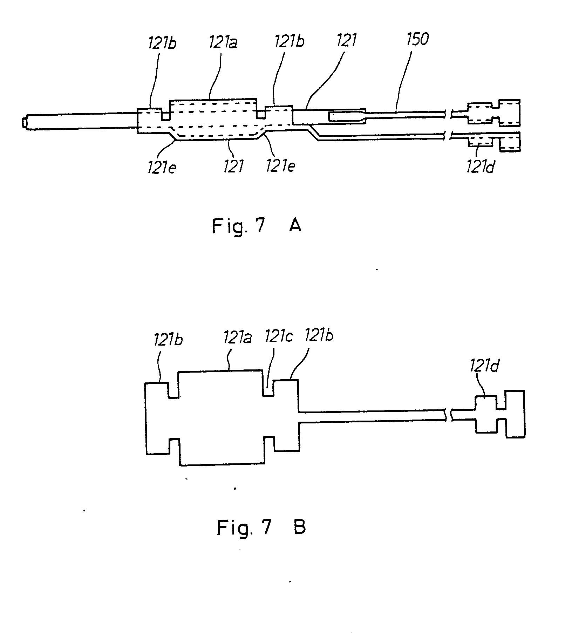

The numerals 140 and 141 denote heater lead wires for supplying electrical power to the heater 130. The heater lead wires 140 and 141 are connected to terminal faces of the heater 130 through heater terminals 150 and 151, respectively. As an example, the heater terminals 150 and 151 are connected to the heater lead wire 140, 141 by pressure bonding and connected to the heater terminal faces by soldering. The numeral 121 denotes a metallic terminal for connecting the inner electrode layer 112 of the oxygen detecting element 111 with the output lead wire 114 and for holding the heater 130. The metallic terminal 121 has a connecting portion 121a formed by using a spring steel sheet which in this embodiment is stainless steel strip for spring SUS631-CSP, a precipitation hardening type stainless steel, and bending it into a cylindrical shape so as to exhibit a resilient force in a radial direction as will be described later, heater holding portions 121b also formed by bending the same spring steel sheet into a cylindrical shape for holding the ceramic heater 130 inserted therethrough by virtue of their resilience, and a terminal portion 121d capable of being connected to the core of the output lead wire 114 preferably by pressure bonding as shown in later-described Figure 7, though not shown in Figure 6. The connecting portion 121a is inserted under application of a compressive force into an inlet opening portion having a somewhat increased inside diameter of the oxygen sensing element 111 and then released whereby it is fixed in pressure contact and electrical connection with, the inner electrode layer 112 formed on the inner surface of the opening and holds the ceramic heater 130 in a predetermined position. Though not shown in Figure 6, the core of the output lead wire 114 is connected by pressure bonding to the terminal portion 121d of the metallic terminal. The numeral 122 denotes a tubular shell extending from the caulking portion 115b of the housing 115 and the numeral 125 denotes a protective sleeve fitted and fixed onto the tubular shell 122. In the portion between an inwardly bent edge of the protective sleeve 125 and a like edge of the tubular shell 122, the protective sleeve 125 holds a spacer 123 and a sealing member 124 with the lead wires 140, 141 and 114 inserted therethrough, and at the same time protects the heater-lead wire connections and the metallic terminal-lead wire connection.

The metallic terminal 121, which is a principal portion of the embodiment, has such a shape as shown in Figure 7. As is apparent from the development view B in Figure 7, a metallic sheet is punched so as to form the connecting portion 121a centrally, two holding portions 121b provided on both sides of the connecting portion 121a through notches 121c, and the terminal portion 121d at an elongated end portion extending from one holding portion 21b. Then, the connecting portion 121a is bent in the form of a cylinder having an inside diameter larger than that of an opening portion 111a of the oxygen sensing element, and the holding portions 121b are also bent in the form of a cylinder having an inside diameter smaller than the outside diameter of the heater. In this case bent portions 121e are formed so that the cylindrical connecting portion 121a and holding portions 121b are aligned with each other. The heater 130 is inserted through the heater holding portions 121b whereby it is held firmly by the metallic terminal 121, and by inserting the connecting portion 121a into the oxygen sensing element 111, the heater 130 is fixed in the interior of the oxygen sensing element 111. The connecting portion 121a is fixed in the opening portion 111a while exhibiting a resilient force which urges the inner electrode layer 112 in the opening portion 111a in a radial direction, whereby the output of the inner electrode layer 112 can be surely conveyed without being influenced by vibration or heat and at the same time the heater 130 can be held in place. Thus, it is not necessary to form a screw-threaded portion in the interior of the oxygen sensing element 111, and the mounting operation can be easily carried out.

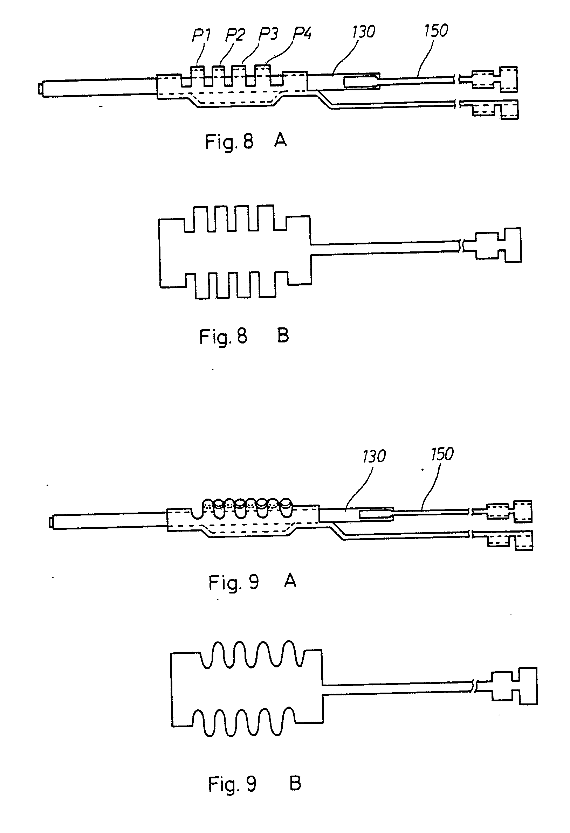

Although in this embodiment the metallic terminal 121 is formed by merely bending a rectangular metallic sheet cylindrically, it may be obtained by forming rectangular notches in a metallic sheet and then bending the sheet cylindrically, as shown in Figure 8, or by forming wavy notches in a metallic sheet and then bending the sheet cylindrically, as shown in Figure 9. In this case, the metallic terminal has a plurality of pressing portions against the inner electrode layer. Therefore, for example, even in the event the metallic terminal is partially deformed by an external force and a pressing portion P1 shown in Figure 8 lose's its resilience, the metallic terminal can be firmly fixed to the inner electrode layer by the resilience of other pressing portions P2 to P4. Consequently, the heater can be fixed more firmly to the inside of the oxygen sensing element, and the output withdrawal from the inner electrode layer is ensured.

Moreover, the above-mentioned embodiments are provided with a narrow and long gap between the tubular shell 22, 122 and the protective sleeve 25, 125, and an internal space of the oxygen sensing element 11, 111 is connected to external atmosphere through said narrow and long gap, preventing the water from entering, the gap is omitted from the figures.

The embodiments show a construction having a protective sleeve 25, 125 fixed to a tubular shell 22, 122, but, for example, the protective sleeve 25, 125 may be fixed to the housing 15, 115.

**Claims**

1. An oxygen sensor including:

(a) a cylindrical oxygen sensing element (11, 111) formed of a solid electrolyte and having one end closed;

(b) an inner electrode layer (12, 112) provided on the inner surface of the cylindrical oxygen sensing element (11, 111);

(c) an outer electrode layer (13, 113) provided on the outer surface of the cylindrical oxygen sensing element (11, 111);

(d) an output lead wire (14, 114) electrically connected to the inner electrode layer (12, 112); and

(e) a metallic terminal (21, 121) for connecting the inner electrode layer (12, 112) of the cylindrical oxygen sensing element (11, 111) with the output lead wire (14, 114),

characterised in that said metallic terminal (21, 121) has a connecting portion (21a, 121a) formed by a cylindrically bent spring steel sheet which exhibits a resilient force in a radial direction, the connecting portion (21a, 121a) being axially inserted under application of a radial compressive force into the open end (11a, 111a) of the cylindrical oxygen sensing element (11, 111) and then released thereby being fixed in pressure contact and electrical connection with the inner electrode layer (12, 112) provided on the inner surface of the cylindrical oxygen sensing element (11, 112).

2. An oxygen sensor as claimed in claim 1, further including a cylindrical housing (15, 115) for holding the oxygen sensing element (11, 111), the housing (15, 115) being electrically connected to the outer electrode layer (13, 113), and a protector (20, 120) attached to a fore end portion (15c, 115c) of the housing (15, 115) for protecting the oxygen sensing element (11, 111), the protector (20, 120) having a plurality of holes (20a, 120a) for allowing gases to come into contact with the outer electrode layer (13, 113).

3. An oxygen sensor as claimed in claim 2, in which the housing (15, 115) has a caulking portion (15b, 115b), and further has a screw-threaded portion (15a, 115a) formed on the outer periphery thereof for mounting the oxygen sensor to a combustion apparatus, a gasket (16, 116) for preventing the leakage of exhaust gases is provided on the portion of the housing (15, 115) to be brought into abutment with a wall surface of the combustion apparatus, and wherein by caulking the caulking portion (15b, 115b) the oxygen sensing element (11, 111) is held by the housing (15, 115) through a plate packing (17, 117), talc (18, 118), caulking ring (19, 119) and outer tubular shell flange portion (22a, 122a) which are disposed on the inner periphery of the housing (15, 115).

4. An oxygen sensor as claimed in claim 2 or 3, in which the metallic terminal (21, 121) and the output lead wire (14, 114) are connected by pressure bonding together a terminal portion (21*b*, 121*d*) of the metallic terminal (21, 121) and core (14*a*) of the lead wire (14, 114), and a co-axial protective sleeve (25, 125) is fixed directly or indirectly to the cylindrical housing (15, 115), the protective sleeve (25, 125) having a sealing member (24, 124) with the lead wire (14, 114) being inserted therethrough, the sealing member (24, 124) being held against an end portion of the protective sleeve (25, 125).

5. An oxygen sensor as claimed in any preceding claim, in which the metallic terminal (21, 121) is a terminal member which has been punched from a metallic sheet to form a connecting portion (21*a*, 121*a*) and a terminal portion (21*b*, 121*d*) provided at an end of an elongated extension extending from the connecting portion (21*a*, 121*a*), the connecting portion (21*a*, 121*d*) being formed inho a cylindrical shape by bending the metallic sheet.

6. An oxygen sensor as claimed in claim 5, in which the metallic terminal (21, 121) is provided with wavy notches before bending the metallic sheet into a cylindrical shape.

7. An oxygen sensor as claimed in claim 5, in which the metallic terminal (21, 121) is provided with rectangular notches before bending the metallic sheet into a cylindrical shape.

8. An oxygen sensor as claimed in any preceding claim, in which the oxygen sensing element (11, 111) is maintained at a predetermined temperature by means of a heater (130), and the metallic terminal (121) holds the heater (130).

9. An oxygen sensor as claimed in claim 8 wherein the heater is a rod-like ceramic heater (130) for heating the cylindrical oxygen sensing element (111), the ceramic heater (130) being disposed in the interior of the cylindrical oxygen sensing element (111), said metallic terminal (121) having a heater holding portion (121*b*) also formed by a cylindrically bent portion of the spring steel sheet to resiliently hold the ceramic heater (130) inserted therethrough.

10. An oxygen sensor as claimed in claim 9, in which the ceramic heater (13) is tubular and comprises a green ceramic core formed in an elongate tubular shape around which is wound a green ceramic sheet with a predetermined shape of a heater pattern of a metal having high melting point printed on the surface of one face, the ceramic sheet being in close contact with the ceramic core, and formed on the surface of the other face of said sheet printed faces of said metal serving as connecting terminal faces electrically connected to both ends of the heater pattern via through holes in the sheet.

11. An oxygen sensor as claimed in claim 10, in which the metal comprises at least one ingredient selected from the group consisting of platinum, tungsten and molybdenum.

12. An oxygen sensor as claimed in claim 10 or 11, further including heater lead wires (140, 141) respectively connected by pressure bonding or by soldering to heater terminals (150, 151) which are connected by soldering to the terminal faces of the heater (130).

13. An oxygen sensor as claimed in claim 12, further including a tubular shell (122) extending from the fixed to the housing (115) for holding the oxygen sensing element, the protective sleeve (125) being fitted and fixed onto the tubular shell (122), whereby the sealing member (124) with leads (140, 141, 114) inserted therethrough is held in the portion between an inwardly bent edge of the protective sleeve (125) and a like edge of the tubular shell (122).

14. An oxygen sensor as claimed in any one of claims 9 to 12, in which the metallic terminal (121) has been formed from a punched metallic sheet so as to form the connecting portion (121*a*) centrally, a holding portion (121*b*) formed on each side of the connecting portion (121*a*) through notches (121*c*) and the terminal portion (121*d*) at an elongate end extending from one holding portion (121*b*), the connecting portion (121*a*) being bent in the form of a cylinder having the inside diameter larger than that of the open end (111*a*) of the oxygen sensing element, the holding portions (121*b*) being bent in the form of a cylinder having an inside diameter smaller than the outside diameter of the heater, the connecting portion (121*a*) and holding portions (121*b*) being aligned with each other by bent portions (121*e*), the heater (130) being inserted through the heater holding portions (121*b*) and thereby held by the metallic terminal (121) and further fixed in the interior of the oxygen sensing element (111) by inserting the connecting portion (121*a*) into the oxygen sensing element.

**Patentansprüche**

1. Sauerstofffühler mit:
(a) einem zylindrischen Sauerstoffabfühlelement (11, 111), das von einem festen Elektrolyten gebildet wird und ein verschlossenes Ende hat,
(b) einer inneren Elektrodenschicht (12, 112), die auf der Innenfläche des zylindrischen Sauerstoffabfühlelementes (11, 111) vorgesehen ist,
(c) einer äußeren Elektrodenschicht (13, 113), die auf der Außenfläche des zylindrischen Sauerstoffabfühlelementes (11, 111) vorgesehen ist,
(d) einem Ausgangsleitungsdraht (14, 114), der elektrisch mit der inneren Elektrodenschicht (12, 112) verbunden ist, und
(e) einem metallischen Anschluß (21, 121) zur Verbindung der inneren Eleltrodenschicht (12, 112) des zylindrischen Sauerstoffabfühlelementes (11, 111) mit dem Ausgangsleitungsdraht (14, 114),
dadurch gekennzeichnet, daß der metallische Anschluß (21, 121) einen Verbindungsabschnitt (21a, 121a) hat, der von einem zylindrisch gebogenen Federstahlblech gebildet wird, welches eine Rückstellkraft in radialer Richtung besitzt, wobei der Verbindungsabschnitt (21a, 121a) axial unter Anwendung einer radialen komprimierenden Kraft in das offene Ende (11a, 111a) das zylindrischen Sauerstoffabfühlelementes (11, 111) eingesetzt und dann freigegeben und so in Druckberührung fixiert ist, und elektrische Verbindung mit der inneren Elektrodenschicht (12, 112) hat, die auf der Innerfläche des zylindrischen Sauerstoffabfühlelementes (11, 111) vorgesehen ist.

2. Sauerstofffühler nach Anspruch 1, weiterhin mit einem zylindrischen Gehäuse (15, 115) zum Halten des Sauerstoffabfühlelementes (11, 111), wobei das Gehäuse (15, 115) elektrisch mit der äußeren Elektrodenschicht (13, 113) verbunden ist, und mit einer Schutzvorrichtung (20, 120), die an einem Vorderendabschnitt (15c, 115c) des Gehäuses (15, 115) befestigt ist, um das Sauerstoffabfühlelement (11, 111) zu schützen, wobei die Schutzvorrichtung (20, 120) mehrere Löscher (20a, 120a) hat, um Gase in Berührung der äußeren Elektrodenschicht (13, 113) kommen zu lassen.

3. Sauerstofffühler nach Anspruch 2, in welchem das Gehäuse (15, 115) einen Abdichtabschnitt (15b, 115b) und außerdem einen mit Schraubgewinde versehenen Abschnitt (15a, 115a), der auf einem Außenumfang gebildet ist, um den Sauerstofffühler in einer Verbrennungsapparatur zu befestigen, hat, ein Dichtungsring (16, 116) zur Verhinderung der Leckage von Abgasen auf dem Abschnitt des Gehäuses (15, 115) vorgesehen ist, der in Anlage an einer Wandfläche der Verbrennungsapparatur zu bringen ist, und worin durch Dichten des Dichtabschnittes (15b, 115b) das Sauerstoffabfühlelement (11, 111) durch das Gehäuse (15, 115) über eine Plattenpackung (17, 117), Talkum (18, 118), einen Dichtungsring (19, 119) und einen äußeren röhrenförmigen Schalenflanschabschnitt (22a, 122a), die auf dem Innenumfang des Gehäuses (15, 115) angeordnet sind, gehalten wird.

4. Sauerstofffühler nach Anspruch 2 oder 3, in dem der metallische Anschluß (21, 121) und der Ausgangsleitungsdraht (14, 114) durch Druckbindung zusammen mit einem Endabschnitt (21b, 121d) des metallischen Anschlusses (21, 121) und einem Kern (14a) des Leitungsdrahtes (14, 114) verbunden sind und eine koaxiale Schutzhülse (25, 125) direkt oder indirekt an dem zylindrischen Gehäuse (15, 115 befestigt ist, wobei die Schutzhülse (25, 125) ein Dichtungsteil (24, 124) hat, durch welches der Leitungsdraht (14, 114) eingeführt ist, und wobei das Dichtungsteil (24, 124) gegen einen Endabschnitt der Schutzhülse (25, 125) gehalten wird.

5. Sauerstofffühler nach einem der vorausgehenden Ansprüche, in welchem der metallische Anschluß (21, 121) ein Anschlußteil ist, welches aus einem Metallblech unter Bildung eines Verbindungsabschnittes (21a, 121a) und eines Anschlußabschnittes (21b, 121d) an einem sich von dem Verbindungsabschnitt (21a, 121a) aus erstreckenden länglichen Fortsatz ausgestanzt wurde, wobei der Verbindungsabschnitt (21a, 121d) durch Biegen des Metallbleches in eine zylindrische Form gebracht ist.

6. Sauerstofffühler nach Anspruch 5, in welchem der metallische Anschluß (21, 121) vor dem Biegen des Metallbleches in eine zylindrische Form mit wellenförmigen Kerben versehen ist.

7. Sauerstofffühler nach Anspruch 5, in welchem der metallische Anschluß (21, 121) vor dem Biegen des Metallbleches in eine zylindrische Form von rechteckigen Kerben versehen ist.

8. Sauerstofffühler nach einem der vorausgehenden Ansprüche, in welchem das Sauerstoffabfühlelement (11, 111) mit Hilfe einer Heizeinrichtung (130) auf einer vorbestimmten Temperatur gehalten wird und der metallische Anschluß (121) die Heizeinrichtung (130) hält.

9. Sauerstofffühler nach Anspruch 8, bei dem die Heizeinrichtung eine stabartige keramische Heizeinrichtung (130) zum Erhitzen des zylindrischen Sauerstoffabfühlelementes (111) ist, wobei die keramische Heizeinrichtung (130) im Inneren des zylindrischen Sauerstoffabfühlelementes (111) angeordnet ist und der metallische Anschluß (121) einen die Heizeinrichtung haltenden Abschnitt (121b) hat, der auch von einem zylindrisch gebogenen Abschnitt des Federstahlbleches gebildet ist, um die darin eingefügte keramische Heizeinrichtung (130) elastisch zu halten.

10. Sauerstofffühler nach Anspruch 9, in welchem die keramische Heizeinrichtung (130) röhrenförmig ist und einen frischen Keramikkern aufweist, der eine längliche Röhrenform hat, um welche ein frischer Keramikbogen mit einer vorbestimmten Form eines Heizeinrichtungsmusters eines Metalles mit hohem Schmelpunkt, das auf die Oberfläche einer Seite aufgedruckt ist, gewikkelt ist, wobei der Keramikbogen in enger Berührung mit dem Keramikkern steht, und auf der Oberfläche der anderen Seite dieses Bogens Flächen des Metalles aufgedruckt sind, die als Verbindungsanschlußfläche dienen, welche mit beiden Enden des Heizeinrichtungsmusters über Durchgangslöcher in dem Bogen elektrisch verbunden sind.

11. Sauertofffühler nach Anspruch 10, in welchem das Metall wenigstens einen Bestandteil aufweist, der aus der Gruppe, die aus Platin, Wolfram und Molbydän besteht, ausgewählt ist.

12. Sauerstofffühler nach Anspruch 10 oder 11, weiterhin mit Heizeinrichtungsleitungsdrähten (140, 141), die jeweils durch Druckbindung oder durch Verlöten mit Heizeinrichtungsanschlüssen (150, 151) verbunden sind, welche durch Verlöten mit den Anschlußflächen der Heizeinrichtung (130) verbunden sind.

13. Sauerstofffühler nach Anspruch 12, weiterhin mit einer röhrenförmigen Schale (122), die sich von dem Gehäuse (115) aus erstreckt und an diesem befestigt ist, um das Sauerstoffabfühlelement zu halten, wobei die Schutzhülse (125) auf die röhrenförmige Schale (122) aufgepaßt und an ihr befestigt ist, wodurch das Dichtungsteil (124) mit Leitungen (140, 141, 114), welches durch sie eingeführt ist, in dem Abschnitt zwischen einer nach innen gebogenen Kante der Schützhülse (125) und einer ähnlichen Kante der röhrenförmigen Schale (122) gehalten wird.

14. Dauerstofffühler nach einem der Ansprüche 9 bis 12, bei dem der metallische Anschluß (121) aus einem derart ausgestanzten Metallblech gebildet wurde, daß der Verbindungsabschnitt (121a) mittig, ein Halteabschnitt (121b) auf jeder Seite des Verbindungsabschnittes (121a) durch Kerben (121c) gebildet und der Anschlußabschnitt (121d) an einem länglichen, sich von einem Halteabschnitt (121b) aus erstreckenden Ende ausgebildet ist, wobei der Verbindungsabschnitt (121a) in der Form eines Zylinders mit dem Innendurchmesser größer als jenem des offenen Endes (111a) des Sauerstoffabfühlelementes gebogen ist, die Halteabschnitte (121b) in der Form eines Zylinders mit einem Innendurchmesser kleiner als der Außendurchmesser der Heizeinrichtung gebogen sind, der Verbindungsabschnitt (121a) und die Halteabschnitte (121b) durch gebogene Abschnitte (121e) miteinander fluchten und die Heizeinrichtung (130) durch die die Heizeinrichtung haltenden Abschnitte (121b) eingeführt ist und dabei von dem metallischen Anschluß (121) gehalten ist und außerdem in dem Inneren des Sauerstoffabfühlelementes (111) durch Einführen des Verbindungsabschnittes (121a) in das Sauerstoffabfühlelement fixiert ist.

## Revendications

1. Capteur d'oxygène comportant:

(a) un élément capteur d'oxygène cylindrique (11, 111) réalisé en un électrolyte solide et présentant une extrémité fermée;

(b) une couche-électrode intérieure (12, 112) prévue sur la surface intérieure de l'élément capteur d'oxygène cylindrique (11, 111);

(c) une couche-électrode extérieure (13, 113) prévue sur la surface extérieure de l'élément capteur d'oxygène cylindrique (11, 111);

(d) un fil conducteur de sortie (14, 114) relié électriquement à la couche-électrode intérieure (12, 112); et

(e) une cosse métallique (21, 121) pour la connexion de la couche-électrode intérieure (12, 112) de l'élément capteur d'oxygène cylindrique (11, 111) au fil conducteur de sortie (14, 114), caractérisé en ce que ladite cosse métallique (21, 121) présente un tronçon de connexion (21a, 121a) constitué par une feuille d'acier à ressorts ployée en cylindre qui présente une force élastique suivant une direction radiale, le tronçon de connexion (21a, 121a) étant inséré axialement sous application d'une force de compression radiale dans l'extrémité ouverte (11a, 111a) de l'élément capteur d'oxygène cylindrique (11, 111) puis relâché étant par là fixé en contact sous pression et électriquement connecté à la couche-électrode intérieure (12, 112) prévue sur la surface intérieure de l'élément de détection d'oxygène cylindrique (11, 111).

2. Capteur d'oxygène selon la revendication 1, comportant encore un corps cylindrique (15, 115) destiné à maintenir l'élément détecteur d'oxygène (11, 111), le corps (15, 115) étant électriquement relié à la couche-électrode extérieure (13, 113), et un élément protecteur (20, 120) fixé à un tronçon d'extrémité avant (15c, 115c) du corps (15, 115) pour protéger l'élément capteur d'oxygène (11, 111), l'élément protecteur (20, 120) présentant une série de trous (20a, 120a) pour laisser des gaz entrer en contact avec la couche-électrode extérieure (13, 113).

3. Capteur d'oxygène selon la revendication 2, dans lequel le corps (15, 115) présente un tronçon de matage (15b, 115b) et présente en outre un tronçon filetée (15a, 115a) façonné sur son pourtour extérieur pour monter le capteur d'oxygène sur un dispositif de combustion, une garniture étanche (16, 116) pour empêcher la fuite de gaz d'échappement est prévue sur le tronçon du corps (15, 115) à abouter contre une surface de paroi du dispositif de combustion, et dans lequel le matage du tronçon de matage (15b, 115b) fait que l'élément capteur d'oxygène (11, 111) se trouve maintenu par le corps (15, 115) par l'intermédiaire d'une garniture étanche de plaque (17, 117), de talc (18, 118), d'un anneau de calfatage (19, 119) et d'un tronçon de rebord d'enveloppe tubulaire extérieur (22a, 122a) qui sont disposés sur le pourtour intérieur du corps (15, 115).

4. Capteur d'oxygène selon la revendication 2 ou 3, dans lequel on relie la cosse métallique (21, 121) et le fil conducteur de sortie (14, 114) en réunissant sous pression l'un à l'autre un tronçon-cosse (21b, 121d) de la cosse métallique (21, 121) et l'âme (14a) du fil conducteur (14, 114), et un manchon protecteur coaxial (25, 125) est fixé directement ou indirectement au corps cylindrique (15, 115), le manchon protecteur (25, 125) comportant un élément d'étanchéité (24, 124) à travers lequel le fil conducteur (14, 114) est inséré, l'élément d'étanchéité (24, 124) étant maintenu contre un tronçon d'extrémité du manchon protecteur (25, 125).

5. Capteur d'oxygène selon toute revendication précédente, dans lequel la cosse métallique (21, 121) est un élément-cosse qu'on a découpé à l'emporte-pièce dans une feuille métallique pour façonner un tronçon de connexion (21a, 121a) et un tronçon-cosse (21b, 121d) prévu à une extrémité d'un prolongement oblong s'étendant à partir du tronçon de connexion (21a, 121a), le tronçon de connexion (21a, 121d) étant mis sous forme cylindrique par cintrage de la feuille métallique.

6. Capteur d'oxygène selon la revendication 5, dans lequel la cosse métallique (21, 121) présente des échancrures ondulées ménagées avant la mise par cintrage de la feuille métallique sous une forme cylindrique.

7. Capteur d'oxygène selon la revendication 5, dans lequel la cosse métallique (21, 121) présente des encoches rectangulaires ménagées avant la mise par cintrage de la feuille métallique sous une forme cylindrique.

8. Capteur d'oxygène selon toute revendication précédente, dans lequel l'élément capteur d'oxygène (11, 111) est maintenu à une température prédéterminée au moyen d'un élément chauffant (130), et la cosse métallique (121) retient l'élément chauffant (130).

9. Capteur d'oxygène selon la revendication 8, dans lequel l'élément chauffant est un élément chauffant céramique en forme de barreau (130) destiné à chauffer l'élément capteur d'oxygène cylindrique (111), l'élément chauffant céramique (130) étant disposé dans l'intérieur de l'élément capteur d'oxygène cylindrique (111), ladite cosse métallique (121) comportant un tronçon de maintien d'élément chauffant (121*b*) aussi constitué par un tronçon cintré en cylindre de la feuille d'acier à ressorts pour maintenir élastiquement l'élément chauffant céramique (130) inséré dans son intérieur.

10. Capteur d'oxygène selon la revendication 9, dans lequel l'élément chauffant céramique (13) est tubulaire et comprend une âme céramique verte mise sous forme tubulaire oblongue autour de laquelle est enroulée une feuille céramique verte portant un motif d'élément chauffant de forme prédéterminée en un métal à haut point de fusion imprimé sur la surface de l'une des faces, la feuille céramique étant en contact étroit avec l'âme céramique et présentant sur la surface de son autre face des faces imprimées en ledit métal servant de faces-bornes de connexion électriquement reliée aux deux extrémités du motif d'élément chauffant à travers des trous percés dans la feuille.

11. Capteur d'oxygène selon la revendication 10, dans lequel le métal comprend au moins un constituant choisi dans le groupe comportant le platine, le tungstène et le molybdène.

12. Capteur d'oxygène selon la revendication 10 ou 11, comportant encore des fils conducteurs d'élément chauffant (140, 141) respectivement reliés par liaison sous pression ou par brasage à des cosses d'élément chauffant (150, 151) reliées par brasage aux faces-bornes de l'élément chauffant (130).

13. Capteur d'oxygène selon la revendication 12, comportant encore une coque tubulaire (122) partant du corps (115) et fixée à celui-ci pour maintenir l'élément capteur d'oxygène, le manchon protecteur (125) étant emboîté et fixé sur la coque tubulaire (122), de sorte que l'élément d'étanchéité (124) est maintenu avec les fils (140, 141, 114) qui y sont insérés dans le tronçon situé entre un bord coudé vers l'intérieur du manchon protecteur (125) et un bord semblable de la coque tubulaire (122).

14. Capteur d'oxygène selon l'une quelconque des revendications 9 à 12, dans lequel on a façonné la cosse métallique (121) à partir d'une feuille métallique découpée de façon à former le tronçon de connexion (121*a*) au milieu, un tronçon de maintien (121*b*) formé sur chaque côté du tronçon de connexion (121*a*) au moyen d'encoches (121*c*) et le tronçon de cosse (121*d*) à une extrémité oblongue partant du tronçon de maintien (121*b*), le tronçon de connexion (121*a*) étant cintré sous forme de cylindre ayant un diamètre intérieur plus grand que l'extrémité ouverte (111*a*) de l'élément capteur d'oxygène, les tronçons de maintien (121*b*) étant cintrés sous forme de cylindre ayant un diamètre intérieur inférieur au diamètre extérieur de l'élément chauffant, le tronçon de connexion (121*a*) et les tronçons de maintien (121*b*) étant alignés l'un sur l'autre par des tronçons coudés (121*e*), l'élément chauffant (130) étant inséré à travers les tronçons de maintien d'élément chauffant (121*b*) et maintenu de ce fait par la cosse métallique (121) et en outre fixé dans l'intérieur de l'élément capteur d'oxygéne (111) par insertion du tronçon de connexion (121*a*) dans l'élément capteur d'oxygène.

Fig. 1

PRIOR ART

Fig. 2

0 145 175

Fig. 3

Fig. 4

Fig. 5

Fig. 6

4

121b  121a  121b  121  150

Fig. 7   A

121e  121  121e  121d

121b  121a 121c  121b  121d

Fig. 7   B

P1 P2 P3 P4 130 150

Fig. 8  A

Fig. 8  B

130 150

Fig. 9  A

Fig. 9  B